(19) Europäisches Patentamt / European Patent Office / Office européen des brevets

(11) **EP 3 446 067 B1**

(12) **FASCICULE DE BREVET EUROPEEN**

(45) Date de publication et mention de la délivrance du brevet:
**19.02.2020 Bulletin 2020/08**

(21) Numéro de dépôt: **17718904.0**

(22) Date de dépôt: **20.04.2017**

(51) Int Cl.:
*G01B 21/16* (2006.01)       *B64F 5/60* (2017.01)
*F16H 57/01* (2012.01)

(86) Numéro de dépôt international:
**PCT/EP2017/059447**

(87) Numéro de publication internationale:
**WO 2017/182593 (26.10.2017 Gazette 2017/43)**

(54) **PROCÉDÉ D'ESTIMATION DU JEU D'UN ACTIONNEUR ÉLECTRO-MÉCANIQUE**

VERFAHREN ZUM SCHÄTZEN DES SPIELS EINES ELEKTROMECHANISCHEN AKTUATORS

METHOD FOR ESTIMATING THE PLAY OF AN ELECTROMECHANICAL ACTUATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2016 FR 1653497**

(43) Date de publication de la demande:
**27.02.2019 Bulletin 2019/09**

(73) Titulaire: **Safran Electronics & Defense**
**92100 Boulogne-Billancourt (FR)**

(72) Inventeurs:
  • **MANSOURI, Badr**
    **92100 BOULOGNE-BILLANCOURT (FR)**
  • **GUYAMIER, Alexandre**
    **92100 BOULOGNE- BILLANCOURT (FR)**
  • **PIATON, Jérôme**
    **92100 BOULOGNE - BILLANCOURT (FR)**

(74) Mandataire: **Regimbeau**
**20, rue de Chazelles**
**75847 Paris Cedex 17 (FR)**

(56) Documents cités:
**FR-A1- 2 940 430**

• **Joonas Sainio: "Backlash compensation in electric vehicle powertrain", Master's Thesis Espoo, 18 avril 2016 (2016-04-18), XP055299894, Extrait de l'Internet: URL:https://aaltodoc.aalto.fi/bitstream/handle/123456789/20350/master_Sainio_Joonas_2016.pdf?sequence=1&isAllowed=y [extrait le 2016-09-05]**
• **ADAM LAGERBERG ET AL: "Backlash Estimation With Application to Automotive Powertrains", IEEE TRANSACTIONS ON CONTROL SYSTEMS TECHNOLOGY, IEEE SERVICE CENTER, NEW YORK, NY, US, vol. 15, no. 3, 1 mai 2007 (2007-05-01), pages 483-493, XP011179741, ISSN: 1063-6536, DOI: 10.1109/TCST.2007.894643 cité dans la demande**

EP 3 446 067 B1

**Description**

DOMAINE TECHNIQUE GENERAL

L'invention concerne le domaine de la surveillance des actionneurs dans les aéronefs, et plus précisément la surveillance des actionneurs électromécaniques à l'aide d'une estimation du jeu (en anglais « *backlash* ») présent dans l'actionneur.

Ces actionneurs sont par exemple destinés à actionner mécaniquement des volets sur les ailes des aéronefs.

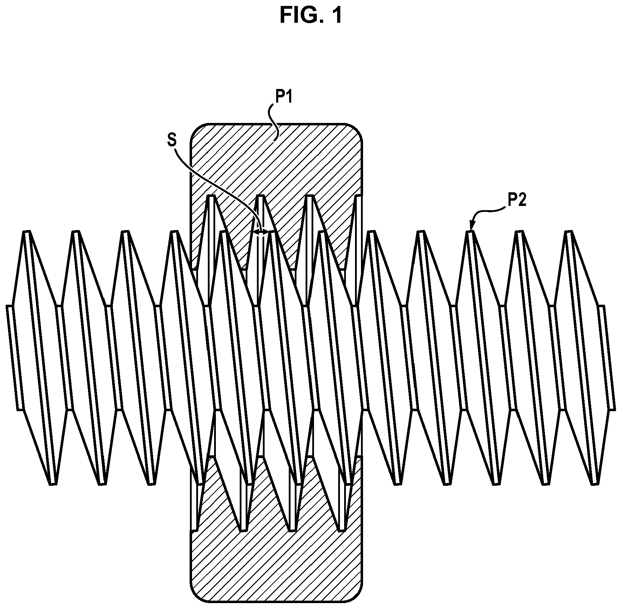

Le jeu S visé ici est un jeu mécanique correspondant à la distance ou l'angle que doit parcourir une pièce P1 d'un système mécanique avant de pouvoir transmettre un mouvement ou un effort à une autre pièce P2 dudit système (voir **figure 1**). Ce phénomène est fréquent dans les composants de couplages mécaniques, tels que les boites de vitesse, les vis-à-billes, les roulements à rouleaux satellites, etc. En général, le jeu se fait ressentir lors de l'inversion du sens de fonctionnement de l'actionneur.

La connaissance de ce jeu est nécessaire pour améliorer la détection de défaut, et pour établir des diagnostiques et pronostiques, comme utilisé dans des méthodes de « *Prognosis and Health Monitoring (PHM)* ».

En particulier, on cherche à connaitre l'amplitude du jeu, qui est une constante et ne dépend pas de la valeur à un instant donné du jeu de l'actionneur.

ETAT DE L'ART

Plusieurs publications ont proposé des modélisations et des implémentations de ce jeu.

Une approche commune est de considérer le jeu comme une zone morte. D'autres approches considèrent la pièce concernée comme élastique, de sorte que le jeu soit compris dans cette élasticité.

L'article de 2007 intitulé « Backlash Estimation With Application to Automotive Powertrains », par Adam Lagerberg et al, décrit un estimateur non-linéaire pour l'amplitude et l'état du jeu à l'aide du formalisme du filtre de Kalman, dans lequel l'estimateur considère le système comme alternant entre un deux modes linéaires, appelés « mode de contact » et « mode de jeu » dans un référentiel absolu. Mais le procédé est coûteux en matière de ressources.

Il n'existe ainsi pas de méthode rapide et efficace pour évaluer cette donnée.

PRESENTATION DE L'INVENTION

L'invention propose un procédé de caractérisation de l'amplitude d'un jeu mécanique d'un actionneur électro-mécanique, l'actionneur électro-mécanique comprenant un moteur électrique et un élément mobile apte à être mis en mouvement par le moteur, ledit jeu étant défini comme une distance ou un angle que doit parcourir l'un du moteur et de l'élément mobile avant de pouvoir transmettre un mouvement ou un effort à l'autre,

l'actionneur comprenant un capteur amont propre à mesurer une position du moteur et un capteur aval propre à mesurer une position de l'élément mobile, ainsi qu'un capteur d'effort propre à mesurer une charge appliquée à l'élément mobile,
le procédé comprenant des étapes de :

- (E1) Mesure de la position du moteur, de la position de l'élément mobile et de la charge appliquée à l'élément mobile à l'aide des trois capteurs,
- (E2) A partir d'une modélisation informatique de l'actionneur et de la position mesurée du moteur, de la position mesurée de l'élément mobile et de la charge appliquée à l'élément mobile mesurée, estimation d'une valeur de jeu mécanique à l'aide d'un observateur d'état en considérant le jeu comme une composante de l'état,
- (E3) Détermination de l'amplitude du jeu à partir d'un ensemble de valeurs de la variable dynamique obtenues à l'étape précédente pour différents instants.

L'invention peut comprendre les caractéristiques suivantes, prises seul ou en combinaison :

- le jeu S(t) est modélisé sous la forme :

$$\dot{S(t)} = 0 + b(t)$$

où *S* est le jeu, *b* est un bruit blanc aléatoire de densité spectrale connue, et *t* est le temps.
- une des composantes de l'état de l'observateur d'état est un écart 5X(t) entre la position mesurée de l'élément mobile X2(t) et la position mesurée du moteur X1(t), de sorte que le vecteur d'état x s'exprime sous la forme suivante :

$$x = \begin{bmatrix} \delta X & \dot{\delta X} & S \end{bmatrix}^T$$

où

$$\delta X = X2 - X1,$$

et la grandeur de sortie mesurée de l'observateur d'état s'exprime sous la forme suivante :

$$y = \begin{bmatrix} \delta X \end{bmatrix}$$

- l'observateur d'état est modélisé sous la forme suivante :

$$\begin{cases} \dot{x} = Ax(t) + Bu(t) + Mw(t) \\ y(t) = Cx(t) + v(t) \end{cases}$$

w et v étant respectivement des perturbations et un bruit de mesure, u(t) étant la commande, avec u(t) étant égale à la charge appliquée à l'élément mobile, mesurée par le capteur d'effort,
avec

$$A = \begin{bmatrix} 0 & 1 & 0 \\ \dfrac{-K}{m_s} & \dfrac{-f}{m_s} & \dfrac{K}{m_s} \\ 0 & 0 & 0 \end{bmatrix}$$

$$B = \begin{bmatrix} 0 & \dfrac{1}{m_s} & 0 \end{bmatrix}^T$$

$$M = \begin{bmatrix} 0 & 0 & 0 \\ 0 & \dfrac{1}{m_s} & 0 \\ 0 & 0 & 1 \end{bmatrix}$$

$$C = \begin{bmatrix} 1 & 0 & 0 \end{bmatrix}^T$$

où K est une raideur de l'actionneur, f un coefficient d'amortissement, $m_s$ une masse de l'élément mobile,
- l'observateur d'état est un observateur de Kalman,
- l'estimateur de Kalman est discrétisé,
- en notant $x(kT_s) = x(k)$ où $T_s$ est une période d'échantillonnage, l'observateur de Kalman est défini par les équations d'état discrètes:

$$\dot{x}(k + 1) = A_d x(k) + B_d u(k) + M_d w(k)$$

$$y(k) = C_d x(k) + v(k)$$

où

$$A_d = e^{AT_s}$$

$$B_d = \int_0^{Ts} e^{Ap} B dp$$

$$M_d = I_n$$

$$C_d = C$$

où $I_n$ est la matrice identité.

- l'amplitude du jeu est calculée comme un écart entre une moyenne des valeurs maximales du jeu estimé et une moyenne des valeurs minimales du jeu estimé parmi l'ensemble de valeurs du jeu,
- l'amplitude du jeu $\Delta S$ est calculée comme suit :

$$\Delta S = \sum_{k=1}^{p} \frac{S_p(k)}{p} - \sum_{k=1}^{n} \frac{S_n(k)}{n}$$

où

$$S_p(k) = \left\{ S(k) \, / \, S(k) \geq \frac{\max[S(k)] + \min[S(k)]}{2} \right\}$$

$$S_n(k) = \left\{ S(k) \, / \, S(k) < \frac{\max[S(k)] + \min[S(k)]}{2} \right\}$$

- l'actionneur est monté sur un aéronef et dans lequel l'étape de mesure (E1) est effectuée en vol avec un profil opérationnel.

L'invention concerne aussi une unité de surveillance pour caractériser de l'amplitude d'un jeu d'un actionneur électro-mécanique, l'actionneur électro-mécanique comprenant un moteur électrique et un élément mobile propre à être mis en mouvement par le moteur, ledit jeu étant défini comme une distance ou un angle que doit parcourir l'un du moteur et de l'élément mobile avant de pouvoir transmettre un mouvement ou un effort à l'autre,

l'actionneur comprenant un capteur amont propre à mesurer une position du moteur et un capteur aval propre à mesurer une position de l'élément mobile, ainsi qu'un capteur d'effort propre à mesurer une charge appliquée sur l'élément mobile,
l'unité étant configurée pour :

- A partir d'une modélisation informatique de l'actionneur et de la position mesurée du moteur, de la position mesurée de l'élément mobile et de la charge appliquée à l'élément mobile mesurée, estimer une valeur du jeu à l'aide d'un observateur d'état en considérant le jeu comme une composante de l'état du système,
- Déterminer une amplitude du jeu à partir d'un ensemble de valeurs du jeu obtenues à l'étape précédente pour différents instants.

L'invention concerne aussi un actionneur électro-mécanique et unité de surveillance associée, l'unité de surveillance étant conforme à ce qui est décrit précédemment.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- La figure 1, déjà présentée, représente un type de jeu concerné dans la présente description,
- La figure 2 représente de manière schématique un actionneur électromécanique pouvant être caractérisé dans le cadre de l'invention,
- La figure 3 représente de manière schématique deux actionneurs de la figure 2 installés en parallèle, selon un mode de réalisation non limitatif,
- La figure 4 représente de manière schématique un modèle de l'actionneur,
- La figure 5 représente des positions (normalisées) de différents éléments de l'actionneur en fonction du temps (normalisé),
- La figure 6 représente une charge appliquée à l'actionneur (normalisée) en fonction du temps,
- La figure 7 représente la position relative (normalisée) entre deux éléments de l'actionneur en fonction du temps,
- La figure 8 représente la valeur du jeu estimé (normalisée) en fonction du temps,
- La figure 9 représente le jeu estimé et la vitesse de l'actionneur en fonction du temps,
- La figure 10 représente le jeu estimé et charge de l'actionneur en fonction du temps.

## DESCRIPTION DETAILLEE

Un procédé de caractérisation de l'amplitude $\Delta S$ d'un jeu $S(t)$ d'un actionneur électro-mécanique 10 va être décrit.

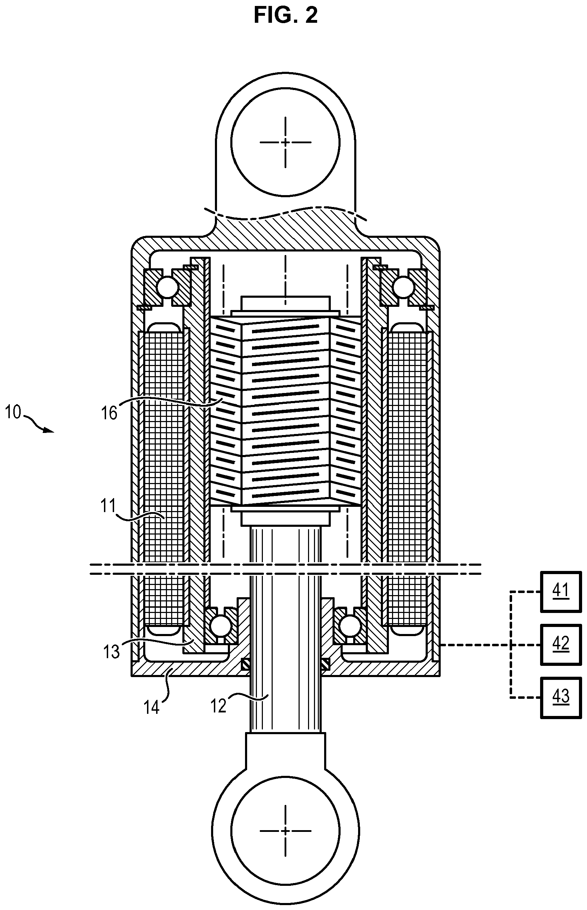

Un exemple d'actionneur électro-mécanique est illustré en **figure 2.**

L'actionneur 10 représenté est un actionneur à déplacement linéaire. L'actionneur 10 comprend un carter, un moteur 11 et une pièce mobile sous la forme d'une tige mobile 12. Le moteur 11 comprend un stator 14 monté fixe par rapport au carter et un rotor 13 mobile en rotation par rapport au stator 14. La tige mobile 12 est mobile en translation par rapport au stator 14 du moteur 11, selon une direction de déplacement parallèle à l'axe de rotation du rotor 13. L'actionneur 10 comprend en outre une pluralité de rouleaux satellites 16 agencés entre le rotor 13 du moteur et la tige mobile 12. Une rotation du rotor 13 par rapport au stator 14 provoque un déplacement de la tige 12 en translation par rapport au stator 14. A cet effet, le rotor 13 comprend une surface interne filetée et la tige 12 comprend une surface externe filetée. Les rouleaux 16 présentent une surface externe filetée avec le même pas de filetage que celui de la tige 12, mais ce pas est inversé par rapport à celui de la tige 12. La surface externe filetée de la tige 12 propre à coopérer avec la surface interne filetée du rotor 13 par l'intermédiaire des rouleaux 16 pour convertir un mouvement de rotation du rotor 13 en un mouvement de translation de la tige 12.
Le document WO2010072932 décrit un tel actionneur.

Un autre exemple d'actionneur concerne des actionneurs à déplacement rotatif, dans lequel la pièce mobile est mobile en translation, et le rotor du moteur entraine la pièce mobile en rotation par rapport au stator.

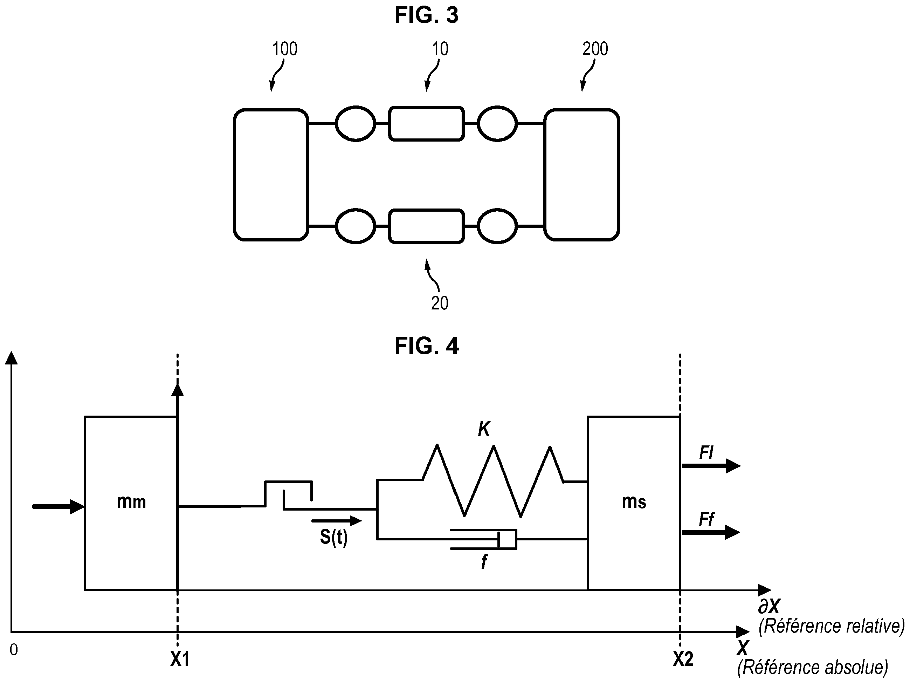

La **figure 3** représente un ensemble d'actionnement d'une gouverne de commande de vol, comprenant deux actionneurs électromécaniques 10 et 20 identiques à l'actionneur de la **figure 2.** Dans le cas présent, les deux actionneurs électromécaniques 10, 20 sont disposés en parallèle entre un bâti 100 et une gouverne 200. L'intérêt d'une telle configuration sera expliqué par la suite. Dans un mode de réalisation particulier, le bâti 100 est une aile d'aéronef et la gouverne 200 est un aileron permettant de contrôler le mouvement de roulis de l'aéronef : les actionneurs permettent de faire pivoter l'aileron par rapport à l'aile de l'aéronef en fonction de la phase de vol (décollage, atterrissage, etc.). La liaison entre le bâti 100 est chaque actionneur 10, 20 est typiquement réalisée à l'aide d'une rotule fixe et la liaison entre la tige 11 de l'actionneur 10, 20 et l'aileron 200 est typiquement réalisée à l'aide d'une rotule mobile.

Chaque actionneur comprend :

- un capteur amont 41, apte à mesurer une position $X1(t)$ du moteur 10, par rapport à un référentiel fixe (par exemple le stator du moteur), la position du moteur $X1$ consiste plus précisément en la position du rotor 13 (en radian),
- un capteur aval 42, apte à mesurer une position $X2(t)$ de la pièce mobile 12, par rapport à un référentiel fixe (par exemple le stator du moteur),
- un capteur d'effort 43, apte à mesurer une charge FI appliquée à l'élément mobile.

Ces informations sont collectées par une unité de traitement. L'unité de traitement comprend une unité de calcul ainsi qu'une mémoire pour stocker les informations. On parlera également d'unité de surveillance pour désigner une unité de traitement configurée pour mettre en œuvre certaines étapes du procédé.

L'unité de traitement peut comprendre un ordinateur embarqué sur l'aéronef, ou un ordinateur au sol auquel ont été transmises les données.

L'actionneur 10 est modélisé informatiquement à l'aide d'un modèle Mod. Il est nécessaire d'établir un modèle dynamique équivalent : Le système rotor accouplé à une vis peut être considéré comme une chaine de transmission entre deux inerties ou deux masses. Dans l'exemple de l'actionneur en **figure 2,** la première inertie est le moteur 11 et la deuxième inertie est la transformation de la masse de la pièce mobile 12 selon l'axe du moteur, à l'aide du pas ou du ratio de réduction r. On peut ainsi établir une position linéaire X1(t) au rotor en fonction de sa position angulaire θ1(t) :

$$X_1 = \theta_1 \frac{r}{2\pi}$$

La position linéaire est donc une position théorique équivalente calculée à partir de la position angulaire.

Cette équivalence peut être mise en œuvre sur la pièce mobile dans le cas d'un actionneur à mouvement rotatif.

Partant, le modèle est illustré en **figure 4,** où X est la position dans le référentiel absolu (m), f est le coefficient d'amortissement (N/(m/s)), K est la raideur (N/m), S(t) est le jeu, $m_m$ est la masse équivalente du moteur (en translation) (Kg), $m_s$ est la masse de la pièce mobile (kg), $F_l$ est la charge aérodynamique (N), $F_f$ est les frottements (N). L'inertie en translation est donnée par la transformation suivante :

$$m_m = J_m \left(\frac{r}{2\pi}\right)^{-2}$$

Où Jm est le moment d'inertie.

Le capteur d'effort 43 mesure la charge $F_l$, mais l'ensemble des efforts appliqués comprend la charge et les frottements :

$$F_{ext} = F_l + F_f$$

Un modèle donné par Karam [REF-KARAM] modélise les frottements selon l'équation suivante :

$$F_f = F_v \dot{X} + signe(\dot{X})\left[F_{dry} + \eta|F_l|\right] \, (1)$$

Où X est la position dans le référentiel absolu, Ff les frottements globaux (N), Fv le paramètre de frottement visqueux (N/(m/s)), Fdry le frottement sec et $\eta$ le rendement mécanique.

Les frottements comprennent les frottements du moteur et ceux de la vis.

En considérant les frottements Ff comme négligeables devant la charge Fl, on obtient :

$$F_{ext} = F_l$$

Le procédé de caractérisation de l'amplitude ΔS de l'état de l'actionneur 10 comprend les étapes E1 à E3 qui suivent.

Dans une première étape E1, la position angulaire du moteur θ1(t) du moteur est mesurée par le capteur amont 41. Comme indiqué précédemment, à cette position angulaire θ1(t) est attribuée une position linéaire équivalente X1(t). Dans cette même étape, la position de l'élément mobile X2(t) est mesurée par le capteur aval 42, et la charge appliquée Fl(t) à l'élément mobile est mesurée par le capteur amont 41.

Ces données sont ensuite récupérées par l'unité de traitement pour être traitées.

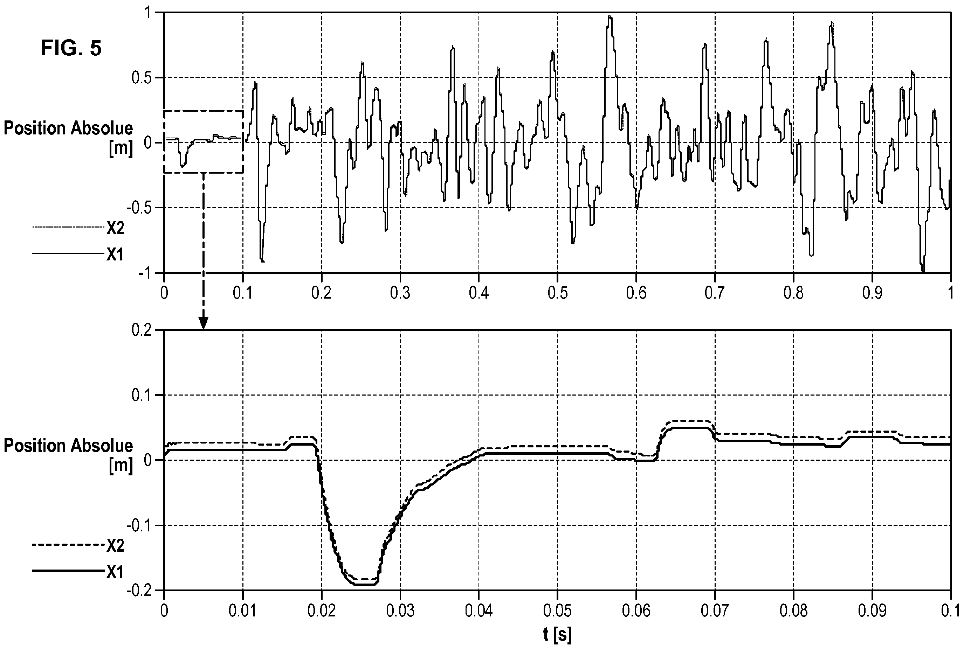

La **figure 5** illustre X1 en trait plein et X2 en trait pointillé (valeurs normalisées). Sur le premier graphe de la **figure 5,** les positions X1 et X2 apparaissent comme confondus à cause de l'échelle : en effet, l'écart relatif en X1 et X2 est faible au regard des valeurs absolues. Néanmoins, en grossissant l'échelle, tel que représenté sur le second graphe de la **figure 5,** on observe une différence entre X1 et X2.

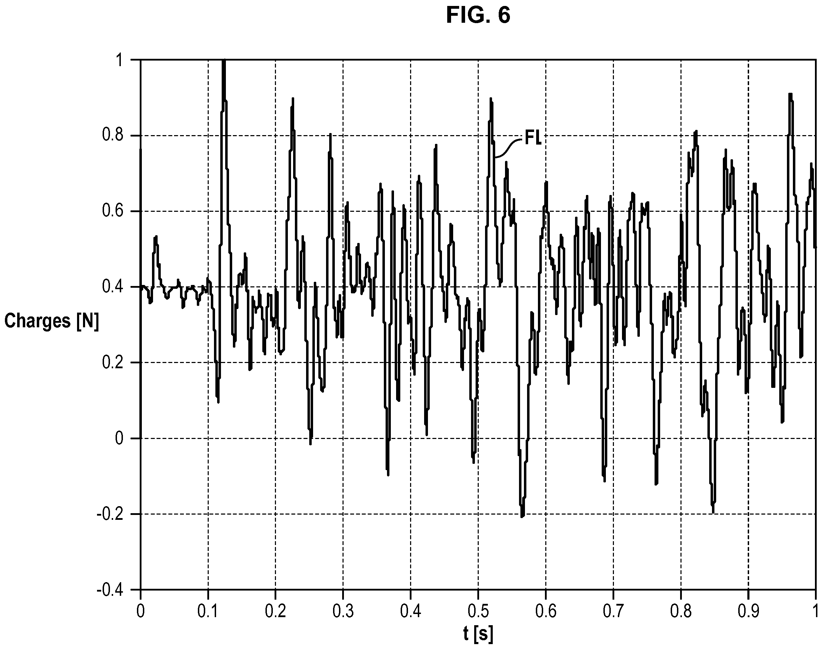

La **figure 6** illustre la charge $F_l$ (valeurs normalisées).

Pour mettre en œuvre la deuxième étape E2, la variable considérée n'est plus définie dans le repère absolu, mais dans un repère relatif par rapport à l'inertie du moteur. On définit ainsi :

$$\delta X = X_2 - X_1$$

Le principe fondamental de la dynamique appliqué à l'inertie de la pièce mobile donne :

$$m_s \ddot{\delta X} = -(K + \Delta K)(\delta X - \delta X_0 - S) - (f + \Delta f)\dot{\delta X} + F_{ext}$$

Où $\Delta K$ et $\Delta f$ sont respectivement des incertitudes de raideur et d'amortissement, $\delta X_0$ est l'écart initial, qui peut être choisi comme nul.

Le schéma d'identification du jeu est fondé sur un filtre de Kalman en utilisant l'équation précédente. L'hypothèse principale consiste à considérer que la variable dynamique S(t) est modélisée comme un état intégral pollué avec un bruit blanc qui est à son tour considéré comme perturbation extérieure, sous la forme suivante :

$$\dot{S(t)} = 0 + b(t)$$

où $S$ est le jeu, $b$ est un bruit blanc aléatoire de densité spectrale connue et sans biais, et $t$ est le temps.

La mise en équation du filtre de Kalman se fait sur la base d'un observateur d'état, dont l'état s'exprime de la façon suivante :

$$x = [\delta X \quad \dot{\delta X} \quad S]^T$$

et la grandeur de sortie mesurée est :

$$y = \delta X$$

L'observateur est modélisé selon les équations suivantes :

$$\begin{cases} \dot{x} = Ax(t) + Bu(t) + Mw(t) \\ \quad y(t) = Cx(t) + v(t) \end{cases} \tag{5}$$

w et v étant respectivement des perturbations et un bruit de mesure, u(t) étant la commande, avec u(t) étant égale à la charge appliquée $F_{ext}=F_l$ à l'élément mobile, mesurée par le capteur d'effort 43,
avec

$$A = \begin{bmatrix} 0 & 1 & 0 \\ \dfrac{-K}{m_s} & \dfrac{-f}{m_s} & \dfrac{K}{m_s} \\ 0 & 0 & 0 \end{bmatrix}$$

$$B = \begin{bmatrix} 0 & \dfrac{1}{m_s} & 0 \end{bmatrix}^T$$

$$M = \begin{bmatrix} 0 & 0 & 0 \\ 0 & \dfrac{1}{m_s} & 0 \\ 0 & 0 & 1 \end{bmatrix}$$

$$C = \begin{bmatrix} 1 & 0 & 0 \end{bmatrix}^T$$

où K est une raideur de l'actionneur, f un coefficient d'amortissement, $m_s$ une masse de l'élément mobile.

Une fois le modèle établi et mis en équation, le filtre de Kalman doit être implémenté.

L'estimateur est discrétisé selon une période de temps Ts. Les mesures sont donc échantillonnées à Ts. En notant :

$$x(kT_s) = x(k)$$

.

les équations discrètes sont données par

$$\dot{x}(k + 1) = A_d x(k) + B_d u(k) + M_d w(k)$$

$$y(k) = C_d x(k) + v(k)$$

Ces matrices sont approximées en partant de solutions générales du système continu donné par l'équation (5), et, en intégrant entre les instants $t_0 = kT_s$ et $t = (k+1)T_s$, où

$$A_d = e^{AT_s}$$

$$B_d = \int_0^{T_s} e^{Ap} B\, dp$$

$$M_d = I_n$$

$$C_d = C$$

où $I_n$ est la matrice identité.

Le filtre de Kalman est défini par deux étapes : l'étape de prédiction et l'étape de mise à jour.

L'étape de prédiction est décrite par les équations suivantes :

$$\hat{x}(k + 1 \mid k) = A_d \hat{x}(k \mid k) + B_d u(k)$$

$$P(k + 1 \mid k) = A_d P(k \mid k) A_d{}^T + M_d W_d M_d{}^T$$

L'étape de mise à jour est décrite par les équations suivantes :

$$K_f(k + 1) = P(k + 1 \mid k).C_d{}^T (C_d P(k + 1 \mid k) C_d{}^T + V_d)^{-1}$$

$$\hat{x}(k + 1 \mid k + 1) = \hat{x}(k + 1 \mid k) + K_f(k + 1).(y(k + 1) - C_d \hat{x}(k + 1 \mid k) - D_d u_d(k + 1))$$

$$P(k + 1 \mid k + 1) = \left(I_n - K_f(k + 1)C_d\right)P(k + 1 \mid k)$$

dans lesquelles Wd et Vd sont respectivement des matrices de covariance de bruit de traitement et de mesure, avec des densités spectrales connues, $\hat{x}(k + 1 \mid k)$ et $\hat{x}(k + 1 \mid k + 1)$ sont les prédictions et les estimations d'état de covariance. $P(k + 1 \mid k + 1)$ et $P(k + 1 \mid k)$ sont les erreurs de prédiction et de covariance de l'erreur d'estimation.

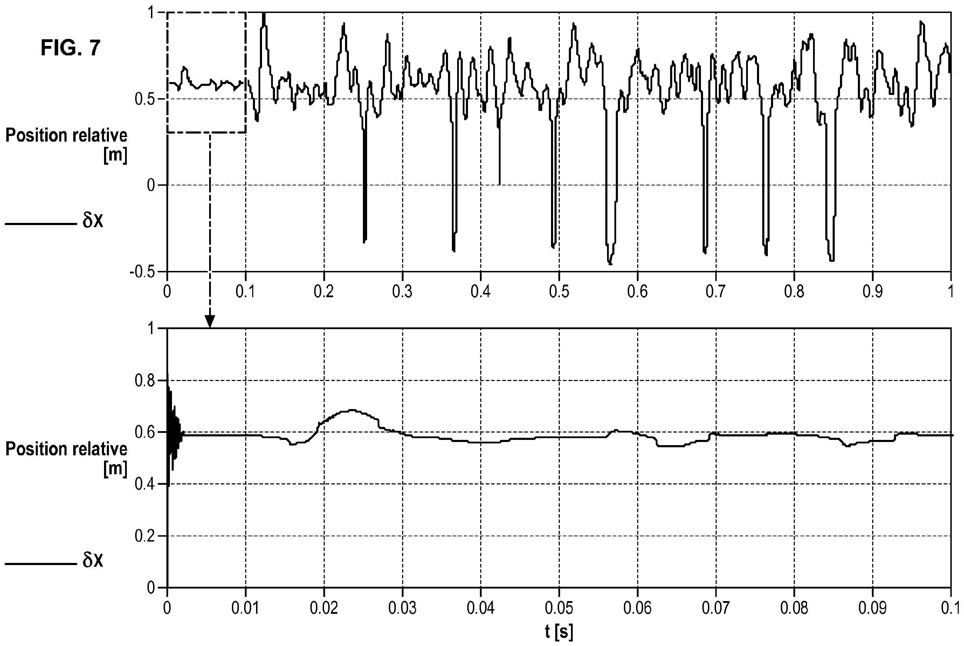

La **figure 7** illustre la position relative $\delta X$ estimée, sur la base des données de positions X1, X2 et de charge $F_l$ présentées en **figures 5 et 6.**

L'étape E2 est typiquement mise en œuvre à l'aide de l'unité de traitement.

A l'issue de l'étape E2, la variable dynamique formant le jeu S(t) est estimée. Pour chaque valeur de temps kTs, on dispose donc d'une valeur du jeu S(t).

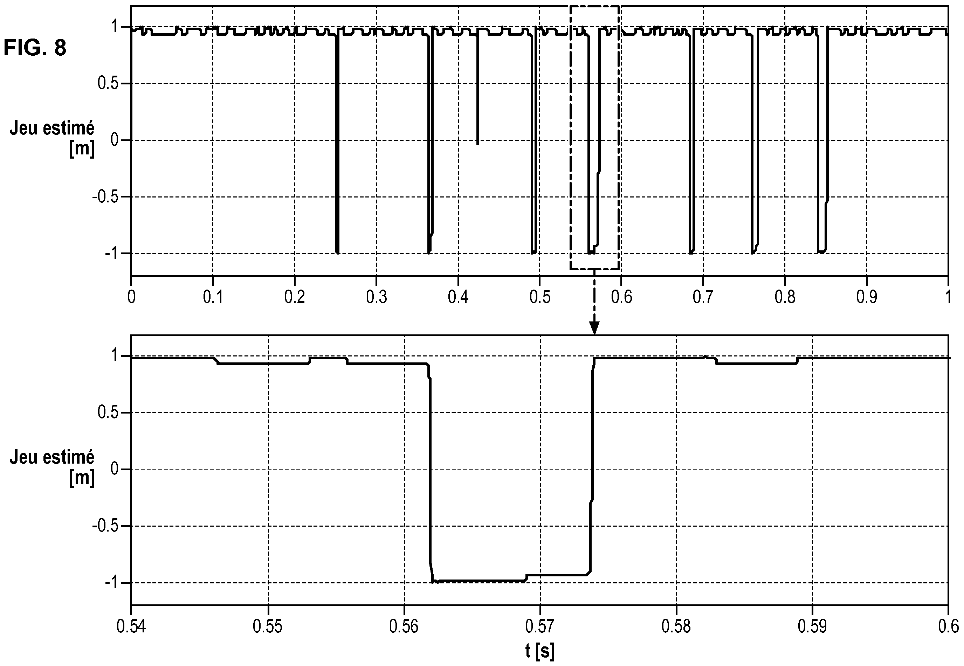

Le jeu estimé S(t) oscille entre une valeur maximale et une valeur minimale, comme illustré en **figure 8** (valeurs normalisées entre -1 et 1). Les variations observées au niveau des valeurs extrémales sont dues à la charge mesurée par le capteur d'effort 43, qui correspond en réalité à la charge $F_l$ et aux frottements Ff.

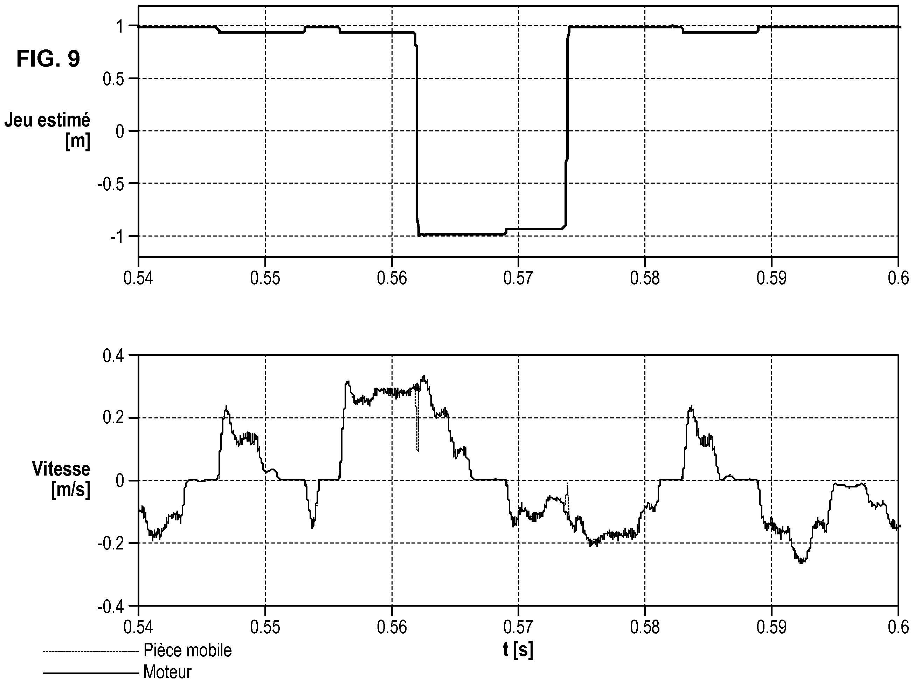

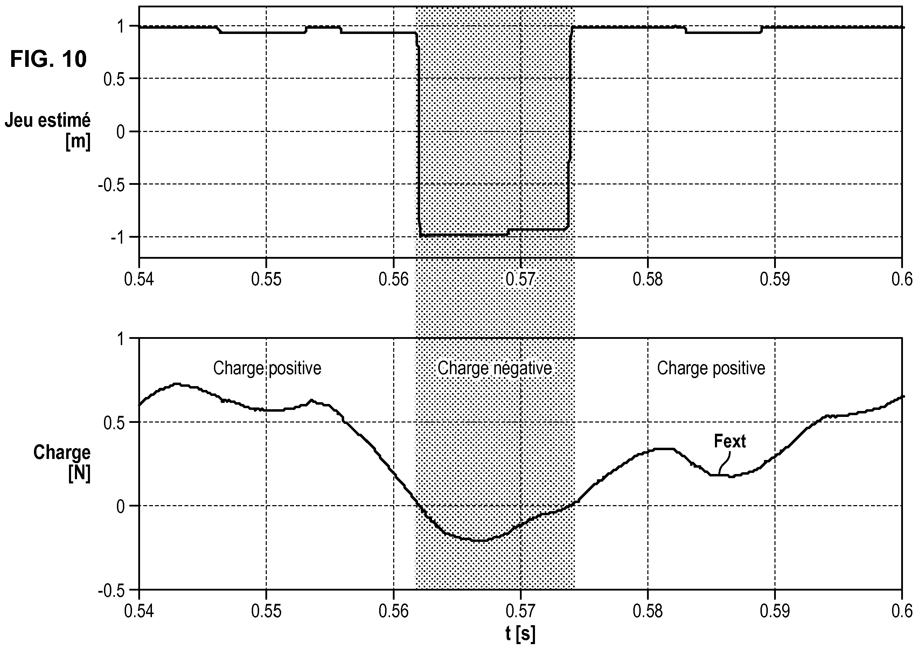

La charge aérodynamique définit une charge positive, qui a tendance à déplacer le jeu vers la borne supérieure, alors que les frottements secs, étant soient ajoutés ou soustraits en fonction du signe (cf. équation (1)) font osciller le jeu autour d'une valeur donnée. Les **figures 9 et 10** illustrent ces situations en comparant le jeu estimé avec la vitesse d'une part et le jeu avec la charge d'autre part. On remarque sur la **figure 9** que les variations (autour de la valeur maximale) dépendent du signe de la vitesse et on remarque sur la **figure 10** que la valeur du jeu S(t) s'inverse avec la charge $F_l$.

On constate que les fluctuations du jeu S(t) sont négligeables par rapport à ses valeurs, ce qui tend à démontrer que l'approximation selon laquelle les frottements $F_f$ sont négligeables par rapport à la charge $F_l$ est valide.

Enfin, à partir des estimations du jeu S(t), dans une troisième étape E3, l'amplitude $\Delta S$ du jeu S(t) est déterminée à partir d'un ensemble de valeurs estimées à l'étape E2.

Cet ensemble inclut préférablement une partie seulement des valeurs estimées.

Par exemple, une méthode de détermination de l'amplitude peut consister à prendre la valeur moyenne des valeurs maximales du jeu estimé et la valeur moyenne des valeurs minimales du jeu estimé, puis de soustraire les deux moyennes. Il s'agit alors d'une amplitude de type «crête à crête» moyennée.

Cette méthode se formalise de la manière suivante :

$$\Delta S = \sum_{k=1}^{p} \frac{S_p(k)}{p} - \sum_{k=1}^{n} \frac{S_n(k)}{n}$$

où

$$S_p(k) = \left\{ S(k) \, / \, S(k) \geq \frac{\max[S(k)] + \min[S(k)]}{2} \right\}$$

$$S_n(k) = \left\{ S(k) \, / \, S(k) < \frac{\max[S(k)] + \min[S(k)]}{2} \right\}$$

Cette méthode a l'avantage d'être applicable quel que soit le calage des capteurs de position amont et aval En effet, à cause de l'erreur d'offset de ces capteurs, le point 0 du jeu mécanique n'est jamais situé au milieu de la plage du jeu.

Le but de l'étape E3 est d'obtenir une donnée constante relative au jeu S(t), qui permet de caractériser l'actionneur. En pratique, avec le vieillissement et l'usure de l'actionneur, l'amplitude $\Delta S$ tend à augmenter. Néanmoins, sur l'échelle de temps relative à la mise en œuvre du procédé, l'amplitude peut être considérée comme une valeur constante représentative de l'état du système sur cette durée de mise en œuvre.

L'étape E3 est typiquement mise en œuvre par l'unité de traitement. La valeur obtenue de l'amplitude $\Delta S$ est ensuite stockée dans la mémoire.

La valeur de l'amplitude $\Delta S$ obtenue par le procédé décrit peut ensuite être utilisée dans des procédés de surveillance de l'état d'un actionneur, en tant que composante d'une signature propre à l'actionneur testé et qui doit être classifiée parmi un ensemble de signatures issues d'une base de données. Une valeur élevée de l'amplitude $\Delta S$ peut être un signe de fatigue et/ou de vieillissement de l'actionneur. En couplant cette donnée avec d'autre données caractérisant l'actionneur, comme des coefficients de raideur de la tige, d'amortissement, ou encore des valeurs liées aux déplacements de la tige, il est possible d'établir des classes de valeurs relatives à des actionneurs selon différents états : bon état, état abimés, état en défaut, par exemple.

Le procédé décrit nécessite l'acquisition de données (voir étape E1). Cette acquisition peut être effectuée durant un vol avec un profil opérationnel, c'est-à-dire durant des instants où l'actionneur est sollicité par l'aéronef pour son vol (tangage, roulis, décollage, etc.). Le procédé peut alors être mis en œuvre sans nécessité une mise à disposition particulière de l'aéronef, ce qui permet d'optimiser les coûts et le temps humain. Lorsque l'acquisition est faite en vol, le procédé peut être mis en œuvre avec l'utilisation d'un seul actionneur, puisque la charge est appliquée directement par les effets physiques du vol.

Alternativement, les essais peuvent être faits au sol, sur le tarmac ou dans un hangar, lors d'un contrôle. Dans ce cas, le mode de réalisation des actionneurs tel que présenté en **figure 3** est avantageux, dans la mesure où l'actionneur 20 peut être sollicité pour exercer une charge sur la surface 200 pendant que l'actionneur 10 est en train d'être testé.

Dans le cas d'une unité de traitement embarquée, les étapes E2 et E3 sont effectuées soit en vol, soit *a posteriori*. Dans le cas d'une unité de traitement au sol, les étapes E2 et E3 sont effectuées après récupération des données de l'étape E1.

Références

[NL-EKF] : Lagerberg, A. and Egardt, B. (2007). Backlash Estimation With Application to Automotive Powertrains. IEEE Transactions On Control System, Vol. 15, No. 3, May 2007.

[KARAM] : Karam, W. Générateurs de forces statiques et dynamiques à haute puissance en technologie électromagnétique. Ph.D. dissertation, Université de Toulouse, 2007.

**Revendications**

1. Procédé de caractérisation de l'amplitude ($\Delta$S) d'un jeu (S(t)) d'un actionneur électro-mécanique (10), l'actionneur électro-mécanique comprenant un moteur électrique (11) et un élément mobile (1) apte à être mis en mouvement par le moteur, ledit jeu (S) étant défini comme une distance ou un angle (m, rad) que doit parcourir l'un du moteur (11) et de l'élément mobile (12) avant de pouvoir transmettre un mouvement ou un effort à l'autre,

   l'actionneur (10) comprenant un capteur amont (41) propre à mesurer une position du moteur (X1(t)) et un capteur aval (42) propre à mesurer une position de l'élément mobile (X2(t)), ainsi qu'un capteur d'effort (43) propre à mesurer une charge appliquée à l'élément mobile (Fl(t)),
   le procédé comprenant des étapes de :

   - (E1) Mesure de la position du moteur (X1(t)), de la position de l'élément mobile (X2(t)) et de la charge appliquée (Fl(t)) à l'élément mobile à l'aide des trois capteurs,
   - (E2) A partir d'une modélisation informatique de l'actionneur et de la position mesurée du moteur (X1(t)), de la position mesurée de l'élément mobile (X2(t)) et de la charge appliquée (Fl(t)) à l'élément mobile mesurée, estimation d'une valeur de jeu mécanique (S(t)) à l'aide d'un observateur d'état en considérant le jeu (S(t)) comme une composante de l'état, le jeu S(t) étant modélisé sous la forme :

$$S\dot{(t)} = 0 + b(t)$$

   où *S* est le jeu, *b* est un bruit blanc aléatoire de densité spectrale connue, et *t* est le temps,
   une des composantes de l'état de l'observateur d'état étant un écart 5X(t) entre la position mesurée de l'élément mobile X2(t) et la position mesurée du moteur X1(t), de sorte que le vecteur d'état x s'exprime sous la forme suivante :

$$x = [\delta X \quad \dot{\delta X} \quad S]^T$$

   où

$$\delta X = X2 - X1,$$

   et la grandeur de sortie mesurée de l'observateur d'état s'exprime sous la forme suivante :

$$y = [\delta X]^T$$

   - (E3) Détermination de l'amplitude du jeu ($\Delta$S) à partir d'un ensemble de valeurs de la variable dynamique obtenues à l'étape précédente pour différents instants (t).

2. Procédé selon la revendication 1, dans lequel l'observateur d'état est modélisé sous la forme suivante :

$$\begin{cases} \dot{x} = Ax(t) + Bu(t) + Mw(t) \\ y(t) = Cx(t) + v(t) \end{cases}$$

w et v étant respectivement des perturbations et un bruit de mesure,
u(t) étant la commande, avec u(t) étant égale à la charge appliquée à l'élément mobile (12), mesurée par le capteur d'effort (43),

avec

$$A = \begin{bmatrix} 0 & 1 & 0 \\ \dfrac{-K}{m_s} & \dfrac{-f}{m_s} & \dfrac{K}{m_s} \\ 0 & 0 & 0 \end{bmatrix}$$

$$B = \begin{bmatrix} 0 & \dfrac{1}{m_s} & 0 \end{bmatrix}^T$$

$$M = \begin{bmatrix} 0 & 0 & 0 \\ 0 & \dfrac{1}{m_s} & 0 \\ 0 & 0 & 1 \end{bmatrix}$$

$$C = \begin{bmatrix} 1 & 0 & 0 \end{bmatrix}^T$$

où K est une raideur de l'actionneur, f un coefficient d'amortissement, $m_s$ une masse de l'élément mobile.

3. Procédé selon l'une des revendications 1 à 2, dans lequel l'observateur d'état est un observateur de Kalman.

4. Procédé selon la revendication 3, dans lequel l'estimateur de Kalman est discrétisé.

5. Procédé selon l'une quelconque des revendications précédentes, dans lequel l'amplitude du jeu ($\Delta S$) est calculée comme un écart entre une moyenne des valeurs maximales du jeu estimé (S) et une moyenne des valeurs minimales du jeu estimé (S) parmi l'ensemble de valeurs du jeu.

6. Procédé selon les revendications 4 et 5 en combinaison, dans lequel l'amplitude du jeu ($\Delta S$) est calculée comme suit :

$$\Delta S = \sum_{k=1}^{p} \frac{S_p(k)}{p} - \sum_{k=1}^{n} \frac{S_n(k)}{n}$$

où

$$S_p(k) = \left\{ S(k) \, / \, S(k) \geq \frac{\max[S(k)] + \min[S(k)]}{2} \right\}$$

$$S_n(k) = \left\{ S(k) \, / \, S(k) < \frac{\max[S(k)] + \min[S(k)]}{2} \right\}$$

7. Procédé selon l'une quelconque des revendications précédentes, dans lequel l'actionneur est monté sur un aéronef et dans lequel l'étape de mesure (E1) est effectuée en vol avec un profil opérationnel.

8. Unité de surveillance pour caractériser l'amplitude (ΔS) d'un jeu (S(t)) d'un actionneur électro-mécanique, l'actionneur électro-mécanique comprenant un moteur électrique et un élément mobile propre à être mis en mouvement par le moteur, ledit jeu étant défini comme une distance ou un angle (m, rad) que doit parcourir l'un du moteur et de l'élément mobile avant de pouvoir transmettre un mouvement ou un effort à l'autre,

l'actionneur (10) comprenant un capteur amont (41) propre à mesurer une position du moteur (X1(t)) et un capteur aval (42) propre à mesurer une position de l'élément mobile (X2(t)), ainsi qu'un capteur d'effort (43) propre à mesurer une charge appliquée sur l'élément mobile (Fl(t)),
l'unité étant configurée pour :

- A partir d'une modélisation informatique de l'actionneur et de la position mesurée du moteur (X1(t)), de la position mesurée de l'élément mobile (X2(t)) et de la charge appliquée (Fl(t)) à l'élément mobile mesurée, estimer une valeur du jeu (S(t)) à l'aide d'un observateur d'état en considérant le jeu (S(t)) comme une composante de l'état du système, le jeu S(t) étant modélisé sous la forme :

$$S\dot{(t)} = 0 + b(t)$$

où $S$ est le jeu, $b$ est un bruit blanc aléatoire de densité spectrale connue, et t est le temps,
une des composantes de l'état de l'observateur d'état étant un écart 5X(t) entre la position mesurée de l'élément mobile X2(t) et la position mesurée du moteur X1(t), de sorte que le vecteur d'état x s'exprime sous la forme suivante :

$$x = [\delta X \quad \dot{\delta X} \quad S]^T$$

où

$$\delta X = X2 - X1,$$

et la grandeur de sortie mesurée de l'observateur d'état s'exprime sous la forme suivante :

$$y = [\delta X]^T$$

et
- Déterminer une amplitude du jeu (ΔS) à partir d'un ensemble de valeurs du jeu obtenues à l'étape précédente pour différents instants (t).

9. Actionneur électro-mécanique et unité de surveillance associée, l'unité de surveillance étant conforme à la revendication 8.

**Patentansprüche**

1. Verfahren zum Charakterisieren der Größe (ΔS) eines Spiels (S(t)) eines elektromechanischen Aktuators (10), wobei der elektromechanische Aktuator einen Elektromotor (11) und ein bewegliches Element (1) umfasst, das geeignet ist, durch den Motor in Bewegung versetzt zu werden, wobei das Spiel (S) als ein Abstand oder ein Winkel (m, rad) definiert ist, den eines von dem Motor (11) und dem beweglichen Element (12) zurücklegen muss, bevor es eine Bewegung oder eine Kraft auf das andere übertragen kann,
wobei der Aktuator (10) einen vorgeschalteten Sensor (41), der geeignet ist, eine Position des Motors (X1(t)) zu messen, und einen nachgeschalteten Sensor (42), der geeignet ist, eine Position des beweglichen Elements (X2(t)) zu messen, sowie einen Kraftsensor (43) umfasst, der geeignet ist, eine auf das bewegliche Element (Fl(t)) angewandte Last zu messen,

wobei das Verfahren die folgenden Schritte umfasst:

- (E1) Messen der Position des Motors (X1(t)), der Position des beweglichen Elements (X2(t)) und der auf das bewegliche Element angewandten Last (Fl(t)) mittels der drei Sensoren,
- (E2) ausgehend von einer informatischen Modellierung des Aktuators und der gemessenen Position des Motors (X1(t)), der gemessenen Position des beweglichen Elements (X2(t)) und der gemessenen auf das bewegliche Element angewandten Last (Fl(t)), Schätzen eines Werts des mechanischen Spiels (S(t)) mittels eines Zustandsbeobachters unter Betrachtung des Spiels (S(t)) als eine Komponente des Zustands, wobei das Spiel S(t) unter der folgenden Form modelliert wird:

$$S(t) = 0 + b(t)$$

wo S das Spiel ist, b ein zufälliges weißes Rauschen mit bekannter Spektraldichte ist und t die Zeit ist, wobei eine der Komponenten des Zustands des Zustandsbeobachters ein Abstand $\delta X(t)$ zwischen der gemessenen Position des beweglichen Elements X2(t) und der gemessenen Position des Motors X1(t) ist, derart, dass der Zustandsvektor x unter der folgenden Form ausgedrückt wird:

$$x = [\delta X \; \delta X \; S]^T$$

wo

$$\delta X = X2 - X1,$$

und die durch den Zustandsbeobachter gemessene Ausgangsgröße unter der folgenden Form ausgedrückt wird:

$$y = [\delta X]^T$$

- (E3) Bestimmen der Größe des Spiels ($\triangle S$) ausgehend von einer Menge von Werten der dynamischen Variablen, die im vorhergehenden Schritt für verschiedene Zeitpunkte (t) erhalten wurden.

2. Verfahren nach Anspruch 1, wobei der Zustandsbeobachter unter der folgenden Form modelliert wird:

$$\begin{cases} \dot{x} = Ax(t) + Bu(t) + Mw(t) \\ \quad y(t) = Cx(t) + v(t) \end{cases}$$

wobei w und v Störungen beziehungsweise ein Messrauschen sind,
u(t) der Befehl ist, wobei u(t) gleich der auf das bewegliche Element (12) angewandten Last, gemessen durch den Kraftsensor (43), ist,

mit

$$A = \begin{bmatrix} 0 & 1 & 0 \\ \dfrac{-K}{m_s} & \dfrac{-f}{m_s} & \dfrac{K}{m_s} \\ 0 & 0 & 0 \end{bmatrix}$$

$$B = \begin{bmatrix} 0 & \dfrac{1}{m_s} & 0 \end{bmatrix}^T$$

$$M = \begin{bmatrix} 0 & 0 & 0 \\ 0 & 1 & 0 \\ 0 & \dfrac{}{m_s} & 0 \\ 0 & 0 & 1 \end{bmatrix}$$

$$C = \begin{bmatrix} 1 & 0 & 0 \end{bmatrix}^T$$

wo K eine Steifigkeit des Aktuators ist, f ein Dämpfungskoeffizient ist und ms eine Masse des beweglichen Elements ist.

3. Verfahren nach einem der Ansprüche 1 bis 2, wobei der Zustandsbeobachter ein Kalman-Beobachter ist.

4. Verfahren nach Anspruch 3, wobei der Kalman-Schätzer diskretisiert ist.

5. Verfahren nach einem der vorhergehenden Ansprüche, wobei die Größe des Spiels ($\Delta$S) als ein Abstand zwischen einem Mittel der Höchstwerte des geschätzten Spiels (S) und einem Mittel der Mindestwerte des geschätzten Spiels (S) unter der Menge der Werte des Spiels berechnet wird.

6. Verfahren nach einem der Ansprüche 4 und 5 in Kombination, wobei die Größe des Spiels ($\Delta$S) wie folgt berechnet wird:

$$\Delta S = \sum_{k=1}^{p} \frac{S_p(k)}{p} - \sum_{k=1}^{n} \frac{S_n(k)}{n}$$

wo

$$S_p(k) = \left\{ S(k)/S(k) \geq \frac{\max[S(k)] + \min[S(k)]}{2} \right\}$$

$$S_n(k) = \left\{ S(k)/S(k) < \frac{\max[S(k)] + \min[S(k)]}{2} \right\}$$

7. Verfahren nach einem der vorhergehenden Ansprüche, wobei der Aktuator an einem Luftfahrzeug montiert ist und wobei der Schritt zum Messen (E1) im Flug mit einem Betriebsprofil durchgeführt wird.

8. Überwachungseinheit zum Charakterisieren der Größe ($\Delta$S) eines Spiels (S(t)) eines elektromechanischen Aktuators, wobei der elektromechanische Aktuator einen Elektromotor und ein bewegliches Element umfasst, das geeignet ist, durch den Motor in Bewegung versetzt zu werden, wobei das Spiel als ein Abstand oder ein Winkel (m, rad) definiert ist, den eines von dem Motor und dem beweglichen Element zurücklegen muss, bevor es eine Bewegung oder eine Kraft auf das andere übertragen kann,
wobei der Aktuator (10) einen vorgeschalteten Sensor (41), der geeignet ist, eine Position des Motors (X1(t)) zu messen, und einen nachgeschalteten Sensor (42), der geeignet ist, eine Position des beweglichen Elements (X2(t)) zu messen, sowie einen Kraftsensor (43) umfasst, der geeignet ist, eine auf das bewegliche Element (Fl(t)) angewandte Last zu messen,
wobei die Einheit ausgestaltet ist zum:

- ausgehend von einer informatischen Modellierung des Aktuators und der gemessenen Position des Motors (X1(t)), der gemessenen Position des beweglichen Elements (X2(t)) und der gemessenen auf das bewegliche Element angewandten Last (Fl(t)), Schätzen eines Werts des Spiels (S(t)) mittels eines Zustandsbeobachters unter Betrachtung des Spiels (S(t)) als eine Komponente des Zustands des Systems, wobei das Spiel S(t) unter der folgenden Form modelliert wird:

$$S(t) = 0 + b(t)$$

wo S das Spiel ist, b ein zufälliges weißes Rauschen mit bekannter Spektraldichte ist und t die Zeit ist, wobei eine der Komponenten des Zustands des Zustandsbeobachters ein Abstand $\delta X(t)$ zwischen der gemessenen Position des beweglichen Elements X2(t) und der gemessenen Position des Motors X1(t) ist, derart, dass der Zustandsvektor x mit der folgenden Formel ausgedrückt wird:

$$x = [\delta X\ \dot{\delta X}\ S]^T$$

wo

$$\delta X = X2 - X1,$$

und die durch den Zustandsbeobachter gemessene Ausgangsgröße unter der folgenden Form ausgedrückt wird:

$$y = [\delta X]^T$$

und
- Bestimmen einer Größe des Spiels ($\Delta S$) ausgehend von einer Menge von Werten des Spiels, die im vorhergehenden Schritt für verschiedene Zeitpunkte (t) erhalten werden.

9. Elektromechanischer Aktuator und zugehörige Überwachungseinheit, wobei die Überwachungseinheit nach Anspruch 8 ist.

**Claims**

1. A method for characterization of the amplitude ($\Delta S$) of a play (S(t)) of an electromechanical actuator (10), the electromechanical actuator comprising an electric motor (11) and a mobile element (1) capable of being set in motion by the motor, said play (S) being defined as a distance or an angle (m, rad) which either of the motor (11) and of the mobile element (12) has to travel before it can transmit a movement or a stress to the other, the actuator (10) comprising an upstream sensor (41) suitable for measuring a position of the motor (X1(t)) and a downstream sensor (42) suitable for measuring a position of the mobile element (X2(t)), as well as a force sensor (43) suitable for measuring a load applied to the mobile element (Fl(t)), the method comprising steps of:

   - (E1) measuring the position of the motor (X1(t)), the position of the mobile element (X2(t)) and the load applied (Fl(t)) to the mobile element by means of the three sensors,
   - (E2) from the computer modelling of the actuator and the measured position of the motor (X1(t)), the measured position of the mobile element (X2(t)) and the load applied (Fl(t)) to the measured mobile element, estimation of a value of mechanical play (S(t)) by means of a state observer by considering the play (S(t)) as a component of the state, the play S(t) being modelled in the form:

$$\dot{S(t)} = 0 + b(t)$$

where S is the play, b is random white noise of known spectral density, and t is the time, one of the components of the state of the state observer being a deviation $\delta X(t)$ between the measured position of the mobile element X2(t) and the measured position of the motor X1(t), such that the state vector x is expressed in the following form:

$$x = [\delta X\quad \dot{\delta X}\quad S]^T$$

where

$$\delta X = X2 - X1,$$

and the magnitude of measured output of the state observer is expressed in the following form:

$$y = [\delta X]^T$$

- (E3) determination of the amplitude of the play ($\Delta S$) from a set of values of the dynamic variable obtained at the preceding step for different instants (t) .

2. The method according to claim 1, wherein the state observer is modeled in the following form:

$$\begin{cases} \dot{x} = Ax(t) + Bu(t) + Mw(t) \\ \quad y(t) = Cx(t) + v(t) \end{cases}$$

w and v being respectively perturbations and a measuring noise,
u(t) being the command, with u(t) being equal to the load applied to the mobile element (12), measured by the force sensor (43),

with:

$$A = \begin{bmatrix} 0 & 1 & 0 \\ \dfrac{-K}{m_s} & \dfrac{-f}{m_s} & \dfrac{K}{m_s} \\ 0 & 0 & 0 \end{bmatrix}$$

$$B = \begin{bmatrix} 0 & \dfrac{1}{m_s} & 0 \end{bmatrix}^T$$

$$M = \begin{bmatrix} 0 & 0 & 0 \\ 0 & \dfrac{1}{m_s} & 0 \\ 0 & 0 & 1 \end{bmatrix}$$

$$C = \begin{bmatrix} 1 & 0 & 0 \end{bmatrix}^T$$

where K is a rigidity of the actuator, f a damping coefficient, $m_s$ a mass of the mobile element.

3. The method according to any one of claims 1 to 2, wherein the state observer is a Kalman observer.

4. The method according to claim 3, wherein the Kalman estimator is discretized.

5. The method according to any one of the preceding claims, wherein the amplitude of the play ($\Delta S$) is calculated as a deviation between an average of the maximal values of the estimated play (S) and an average of the minimal values of the estimated play (S) from among the set of values of the play.

6. The method according to claims 4 and 5 in combination, wherein the amplitude of the play ($\Delta S$) is calculated as follows:

$$\Delta S = \sum_{k=1}^{p} \frac{S_p(k)}{p} - \sum_{k=1}^{n} \frac{S_n(k)}{n}$$

where

$$S_p(k) = \left\{ S(k) \; / \; S(k) \; \geq \; \frac{\max[S(k)] + \min[S(k)]}{2} \right\}$$

$$S_n(k) = \left\{ S(k) \; / \; S(k) \; < \; \frac{\max[S(k)] + \min[S(k)]}{2} \right\}$$

7. The method according to any one of the preceding claims, wherein the actuator is mounted on an aircraft and wherein the measuring step (E1) is conducted in flight with an operational profile.

8. A monitoring unit for characterizing the amplitude ($\Delta S$) of play (S(t)) of an electromechanical actuator, the electromechanical actuator comprising an electric motor and a mobile element suitable for being set in motion by the motor, said play being defined as a distance or an angle (m, rad) which either of the motor and of the mobile element has to travel before it can transmit a movement or a stress to the other,
the actuator (10) comprising an upstream sensor (41) suitable for measuring a position of the motor (X1(t)) and a downstream sensor (42) suitable for measuring a position of the mobile element (X2(t)), as well as a force sensor (43) suitable for measuring a load applied to the mobile element (Fl(t)),
the unit being configured to:

- from the computer modelling of the actuator and the measured position of the motor (X1(t)), the measured position of the mobile element (X2(t)) and the load applied (Fl(t)) to the measured mobile element, estimate a value of the play (S(t)) by means of a state observer by considering the play (S(t)) as a component of the state of the system, the play S(t) being modeled in the form:

$$\dot{S(t)} = 0 + b(t)$$

where S is the play, b is random white noise of known spectral density, and t is time,
one of the components of the state of the state observer being a deviation $\delta X(t)$ between the measured position of the mobile element X2(t) and the measured position of the motor X1(t), so that the state vector x is expressed in the following form:

$$x = [\delta X \quad \dot{\delta X} \quad S]^T$$

where

$$\delta X = X2 - X1,$$

and the magnitude of measured output of the state observer is expressed in the following form:

$$y = [\delta X]^T$$

and
- determine amplitude of the play ($\Delta S$) from a set of values of the play obtained at the preceding step for different instants (t).

9. An electromechanical actuator and associated monitoring unit, the monitoring unit being according to claim 8.

**FIG. 1**

# FIG. 2

EP 3 446 067 B1

## FIG. 3

## FIG. 4

**FIG. 5**

Position Absolue [m]

X2
X1

t [s]

Position Absolue [m]

X2
X1

**FIG. 6**

FIG. 7

EP 3 446 067 B1

FIG. 8

EP 3 446 067 B1

FIG. 9

Jeu estimé [m]

Vitesse [m/s]

t [s]

------------ Pièce mobile

——————— Moteur

EP 3 446 067 B1

**FIG. 10**

Jeu estimé [m]

Charge [N]

Charge positive    Charge négative    Charge positive

Fext

t [s]

EP 3 446 067 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010072932 A

**Littérature non-brevet citée dans la description**

- **ADAM LAGERBERG.** *Backlash Estimation With Application to Automotive Powertrains*
- **LAGERBERG, A. ; EGARDT, B.** Backlash Estimation With Application to Automotive Powertrains. *IEEE Transactions On Control System,* Mai 2007, vol. 15 (3
- **KARAM, W.** Générateurs de forces statiques et dynamiques à haute puissance en technologie électromagnétique. *Ph.D. dissertation,* 2007